# EUROPEAN PATENT SPECIFICATION

(11) **EP 0 945 244 B1**
(45) Date of publication and mention of the grant of the patent: **02.01.2004**
(21) Application number: 98303625.2
(22) Date of filing: 08.05.1998
(51) Int. Cl.: B29C 47/00, C08L 23/06

(54) **Process for the manufacture of environmental friendly papers as well as corresponding papers**
Verfahren zur Herstellung von umweltschonenden Papieren wie auch entsprechende Papieren
Procédé pour la production de papiers sans danger pour l'environnement et papiers correspondants

(30) Priority: 25.03.1998 CN 98100956
(43) Date of publication of application: 29.09.1999
(73) Proprietor: Lung Meng Environmental Friendly Paper Products Hong Kong (Holdings) Limited, Hong Kong (HK)
(72) Inventor: Liang, Shih-Huei, Hsin-Shin Hsiang, Tainan County (TW)
(74) Representative: Woods, Geoffrey Corlett

(56) References cited:
- EP-A- 0 111 287
- US-A- 5 254 617
- DATABASE WPI Section Ch, Week 8549 Derwent Publications Ltd., London, GB; Class A17, AN 85-307800 XP002073510 & JP 60 215 034 A (MITSUBISHI CHEM IND LTD)
- DATABASE WPI Section Ch, Week 8144 Derwent Publications Ltd., London, GB; Class A17, AN 81-80569D XP002073539 & JP 56 118 437 A (OJI YUKA GOSEISHI KK)
- DATABASE WPI Section Ch, Week 9314 Derwent Publications Ltd., London, GB; Class A17, AN 93-112439 XP002073512 & JP 05 050 522 A (TONEN SEKIYU KAGAKU KK)
- DATABASE WPI Section Ch, Week 9311 Derwent Publications Ltd., London, GB; Class A17, AN 93-088743 XP002073513 & JP 05 032 798 A (SHINETSU POLYMER CO)
- DATABASE WPI Section Ch, Week 8422 Derwent Publications Ltd., London, GB; Class A18, AN 84-136266 XP002073515 & JP 59 068 212 A (MITSUI TOATSU CHEM INC)
- DATABASE WPI Section Ch, Week 8930 Derwent Publications Ltd., London, GB; Class A17, AN 89-217475 XP002073514 & JP 01 156 061 A (MITSUI PETROCHEM IND CO LTD)
- DATABASE WPI Section Ch, Week 8651 Derwent Publications Ltd., London, GB; Class A17, AN 86-334784 XP002073511 & JP 61 248 793 A (YOSHINO KASEI KK)

## Description

The present invention relates to a process for the manufacture of an environmental friendly synthetic paper having up to about 80% by weight of inorganic mineral powders. More particularly, the present invention relates to a process for the manufacture of a paper having two dimensional strength by using a combination of at least of one extruder and a forming mould having an ○-shaped gate. The present invention also relates to a composition for the manufacture of an environmental friendly paper comprising up to about 80% weight of inorganic mineral powders.

Numerous synthetic papers have been developed. Papers of single and multiple layers having polypropylene as a main component and inorganic mineral powders as fillers are produced from formulations of conventional plastic films. Papers are coextruded as a single layer or multiple layers during the process, and are formed as a sheet through a forming mould having a direct-line gate. After being stretched in a longitudinal direction, the sheet is laminated by other sheets on its two sides, and then it is stretched in latitudinal direction. The resulting multiple-layered paper has a middle layer which has been stretched in two directions and two surface layers which have only been stretched in one direction. If the sheet which has been stretched in a longitudinal direction is subjected to the stretch in a latitudinal direction, the resulting paper with a single layer or multiple layers possesses two dimensional stretched properties at its surface. Although advantages can be found in the above papers made from polypropylene, they are still inferior to the papers made from pulp. The drawbacks of the papers made from polypropylene include bad foldability, great differences between latitudinal and longitudinal tearing strength, or no tearing ability, etc. In addition, the papers made from polypropylene will not quickly decompose in a natural environment. Furthermore, the production cost of synthetic papers is much higher than that of pulp papers. In view of the above drawbacks, synthetic papers do not fully comply with the needs of consumers.

EP-A-0111287 describes a non-cross linkable electrically conductive and calendarable moulding mass based on thermoplastics, inorganic fillers and soot.

JP-A-60 215034 discloses hydrophilic porous films having a water vapour transmission rate of over 500 g/m²/24 hrs and moisture absorption rate of over 0.1 wt %. The films have a composition of 100 parts by weight polyethylene, 1 to 100 parts by weight of polybutadiene and 25 to 400 parts by weight of a filler.

JP-A-56 118437 discloses a film consisting of 100 parts by weight of olefinic resin, 3 to 300 parts by weight of miropowdered CaCO₃ and 0.05 to 5 parts by weight of fatty acid.

JP-A-50-50522 describes an elastomer film produced by air cooling inflation moulding of a composition which comprises (a) 20 to 70 parts by weight (based on 100 parts by weight of (a) + (b)) of a filler.

JP-A-5032978 describes a film produced by inflation moulding of an ethylene-methacrylic acid copolymer.

JP-A-59 068212 describes a film of polyethylene that is stretched longitudinally to 400% to 1200% to provide a packing film having high twist retention.

The object of the present invention is to provide a process for the manufacture of an environmental friendly synthetic paper, which process comprises:
(i) mixing, extruding, milling and polymerizing a combination of from 70% to 80% by weight of inorganic mineral powders as main components, 29% to 18% by weight of polyethylene and 1% to 2% by weight of additives to form granules;
(ii) feeding the granules into a paper film producing means which comprises at least one extruder and a forming mould having an ○-shaped gate, wherein the forming mould has at least one inlet thereon each inlet defining an inner passage in the forming mould and communicating with the gate of the forming mould;
(iii) melting the granules in the extruder, transferring the melted granules to the inlet of the forming mould, and moulding the melted granules into a hollow film tube which substantially corresponds to the ○-shaped gate;
(iv) cooling the tube; and
(v) inflating and pulling an end of the film tube so that the film tube is stretched in two dimensions simultaneously to form the paper, wherein the ratio of the tensile strength of said paper in the machine direction to the tensile strength of said paper in the transverse direction is in the range from 1.13:1 to 1:0.91 and the ratio of the tearing strength of said paper in the machine direction to the tearing strength of said paper in the transverse direction is in the range from 1.0:1 1 to 1:1.20.

In the process for the manufacture of an environmental friendly synthetic paper of the invention, a combination of at least one extruder and a forming mould having an ○-shaped gate is used to extrude the components as an ○-shaped film tube and the ○-shaped film tube is inflated so that the film is stretched in two dimensional directions simultaneously.

Yet another object of the invention is to provide a process for the manufacture of an environmental friendly paper, in which the density of the paper is reduced from about 2g/cm³ of the combination of the raw materials to as low as about 0.5 g/cm³, saving an amount of up to 40% volume when compared with the density of pulp of about 0.7 g/cm³ to 0.9 g/cm³.

Yet another object of the present invention is to provide a process for the manufacture of an environmental friendly paper, in which the paper possesses similar properties as those of pulp paper, such as foldability, stiffness, opaqueness, writing ability, and latitudinal and longitudinal tearing strength.

Yet another object of the present invention is to provide a process for the manufacture of an environmental friendly paper, in which neither toxic gas nor smoke is produced when the paper produced is burned because only a minor amount of high density polyethylene is burned, and the paper produced is recyclable.

Yet another object of the present invention is to provide a process for the manufacture of an environmental friendly paper, in which a single-layered paper produced will decompose in a natural environment.

Yet another object of the present invention is to provide a synthetic paper comprising a sheet having at least one layer, wherein the layer is made from a composition consisting essentially of inorganic mineral powders in an amount from 70% to 80% by weight based on the total weight of the composition, polyethylene in an amount from 18% to 29% by weight based on the total weight of the composition, and 1% to 2% by weight of additives, wherein the ratio of the tensile strength of said paper in the transverse direction is in the range from 1.13:1 to 1:0.91 and the ratio of tearing strength of said paper in the machine direction to the tearing strength of said paper in the transverse direction is in the range from 1.0:1 to 1:1.20.

The above features and advantages of the present invention will be better understood with reference to the accompanying figures, detailed description and examples. It should also be understood that the particular environmental friendly paper illustrating the present invention is exemplary only and not to be regarded as a limitation of the invention.

Reference is now made to the accompanying figures in which certain figures illustrate embodiment of the present invention from which its novel features and advantages will be apparent.

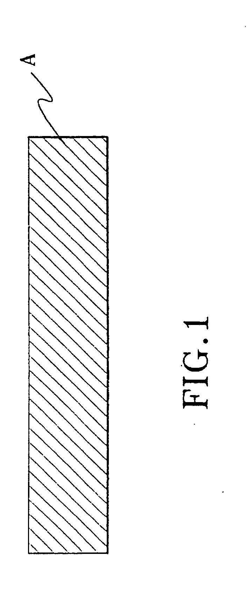

Figure 1 represents a schematic view of a single-layered environmental friendly paper;
Figure 2 represent a schematic view of a flow chart of a process for the manufacture of a single-layered environmental friendly paper;
Figure 2a represents a schematically cross-sectional view of a forming mould having an ○-shaped gate and a single inner passage of Figure 2;
Figure 2b represents a schematic top view of a forming mould having an ○-shaped gate and a single extruder of Figure 2;
Figure 3 represents a schematic view of a double-layered environmental friendly paper;
Figure 4 represents a schematic view of a flow chart of a process for the manufacture of a double-layered environmental friendly paper;
Figure 4a represents a schematically cross-sectional view of a forming mould having an ○-shaped gate and two inner passages shown in Figure 4;
Figure 4b represents a schematic top view of a forming mould having an ○-shaped gate and two extruders shown in Figure 4;
Figure 5 represents a schematic view of a triple-layered environmental friendly paper;
Figure 6 represents a schematic view of a flow chart of a process for the manufacture of a triple-layered environmental friendly paper;
Figure 6a represents a schematically cross-sectional view of a forming mould having an ○-shaped gate and three inner passages of Figure 6;
Figure 6b represents a schematic top view of a forming mould having an ○-shaped gate and three extruders of Figure 6;
Figure 7a represents a schematic view of a two-in-one laminated environmental friendly paper;
Figure 7b represents a schematic view of a three-in-one laminated environmental friendly paper;
Figure 8 represents a schematic view of a laminating machine;
Figure 9a represents a schematic view of the structure of a coated single-layered environmental friendly paper;
Figure 9b represents a schematic view of the structure of a coated double-layered environmental friendly paper;
Figure 9c represents a schematic view of the structure of a coated triple-layered environmental friendly paper;
Figure 9d represents a schematic view of the structure of a coated laminated environmental friendly paper; and
Figure 10 represents a schematic view of a two-sided coating machine.

By way of illustration and to provide a more complete appreciation of the present invention with many of the attendant advantages thereof, the following detailed description is given concerning the process for the manufacture of this paper.

In the process for the manufacture of a single-layered environmental friendly paper of the present invention a composition comprising from 70% to 80% by weight of inorganic mineral powders as main components, 29% to 18% by weight of polyethylene and 1% to about 2% by weight of additives is used. The inorganic mineral powders include at least two components selected from the group consisting of calcium carbonate, calcium sulfate, barium sulfate, kaolin, mica, zinc oxide, dolomite, glass fiber, hollow glass microbead, silica, chalk, talc, pigment, titanium dioxide, silica dioxide, bentonite, clay and diatomaceous earth and mixtures thereof, which have been sintered or not. Polyethylene includes high density polyethylene or a combination of high density polyethylene and at least one selected from the group consisting of medium density polyethylene (i.e., linear low density polyethylene), and low density polyethylene. The additives include those conventionally used in the art, such as coupling agents, lubricants, dispersant agents, and antistatic agents.

The coupling agent is for instance a silane coupling agent such as beta-(3,4-epoxycyclohexyl)ethyltrimethoxy-silane.

An example of lubricants is N-oleyl palmitamide. The antistatic agent is, for example, N,N-bis(2-hydroxyethyl)cocoamine or N,N-bis)2-hydroxyethyl)stearyl amine.

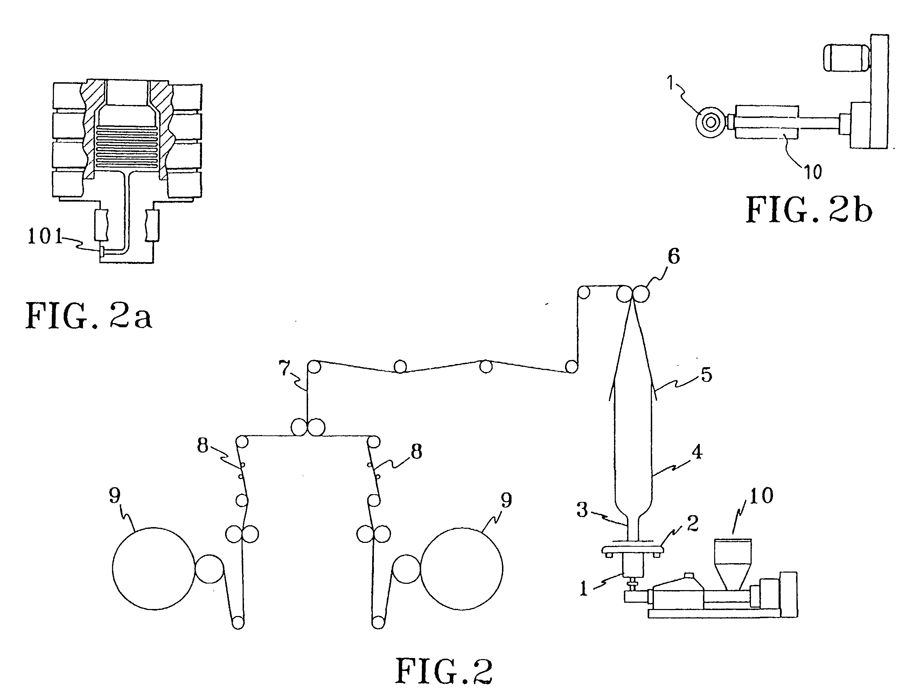

After a series of treatment steps of mixing, extruding, milling, and polymerizing, the combination of the above-mentioned raw materials turn into granulates. Referring to Figs. 2 and 2a, the granulates are fed into an extruder 10 (a single extruder) for producing a paper film. A forming mould 1 having an ○-shaped gate has an inlet on its surface. The inlet defines an inner passage 101 in the forming mould 1 and the inner passage 101 communicates with the gate of the forming mould 1. When the temperature of the extruder 10 is set at a temperature above the melting point of the granulates, for example, a range from about 150°C to about 220°C, the granulates melt and are then transported to the inlet of the forming mould 1 through the single inner passage 101 by the force directly coming from two rotating screws of the extruder 10. The melted granulates are moulded as a paper film tube 3 having an hollow ○-shape from the gate of the forming mould 1. The paper film tube 3 moulded from the gate of the forming mould 1 has a temperature as high as 150°C to 220°C and is cooled down by a cooling wind. Preferably, this is a vertically blowing wind from a cooling means 2 provided above the gate of the forming mould 1. Keeping the cooling wind blowing vertically can ensure that the shape of the paper film tube 3 is maintained as that of the gate of the forming mould 1. The temperature of the paper film tube 3 should be cooled down to about 80°C to about 120°C at a distance within about 700 mm from the gate of the forming mould 1, so the next step can be continued.

Next, the paper film tube 3 is inflated, for example by pressured air through a passage (not shown) in the forming mould 1. At the same time, one end of the initially moulded paper film tube 3 is drawn by a leading roller 6. The rotation speed of the leading roller 6 is controlled so that the paper film tube 3 is substantially air-tight. The rotating speed of the leading roller 6, the amount of the extruded materials from the extruder 10, and the required thickness of the paper film tube 3 are suitably controlled so that the paper film tube 3 is inflated three to eight times at a distance of about 200 mm to about 700 mm from the gate of the forming mould 1. The purpose of the inflation and drawing is to simultaneously stretch the paper film tube 3 in two directions, i.e., latitudinally and longitudinally, resulting in an environmental friendly paper 4 having a structure with two dimensional strength. Under the action of inflation, the density of the environmental friendly paper 4 can be reduced from that of the combination of the raw materials about 2g/cm³ to about 0.5g/cm³, saving an amount of up to about 40% volume when compared with the density of pulp which is about 0.7g/cm³ to about 0.9g/cm³. Because the drawing force from the leading roller 6, the environmental friendly paper 4 is drawn into a folding means 5 provided between the leading roller 6 and the cooling means 2 so that the environmental friendly paper 4 is symmetrically folded into a folded flat paper. The purposes of the leading roller 6 include drawing the initially formed paper film tube 3 with a low rotation speed so that the wind from the cooling means 2 is evenly blown thereto and stabilizing the paper film tube 3, and maintaining the paper film tube 3 air-tight so that the paper film tube 3 is evenly inflated. Also, the rotation speed of the leading roller 6 is an essential factor to the longitudinal stretch and the required thickness of the paper film. Of course, the rotation speed should be suitably adjusted to comply with the amount of extruded materials coming from the extruder 10. Then, the folded environmental friendly paper passes a cutting means 7 so that the folded paper is cut into two sheets of paper. The two resulting sheets of the environmental friendly paper are each subjected to treatment of a surface corona means 8 so that numerous microvoids are formed on the two surfaces of each environmental friendly paper and better adhesion can be obtained therefrom. The environmental friendly paper is then collected on a roll 9. During the process for the manufacture of a single-layered environmental friendly paper, the thickness of the paper can be suitably controlled within a range from about 30 µm to about 150 µm, the width can be about 0.2 m to about 3.2 m, and the density can be about 0.4 g/cm³ to about 1 g/cm³.

The present invention is also directed to a process for the manufacture of a double-layered environmental friendly paper. The differences between this process and that of the single-layered paper are explained in two aspects.

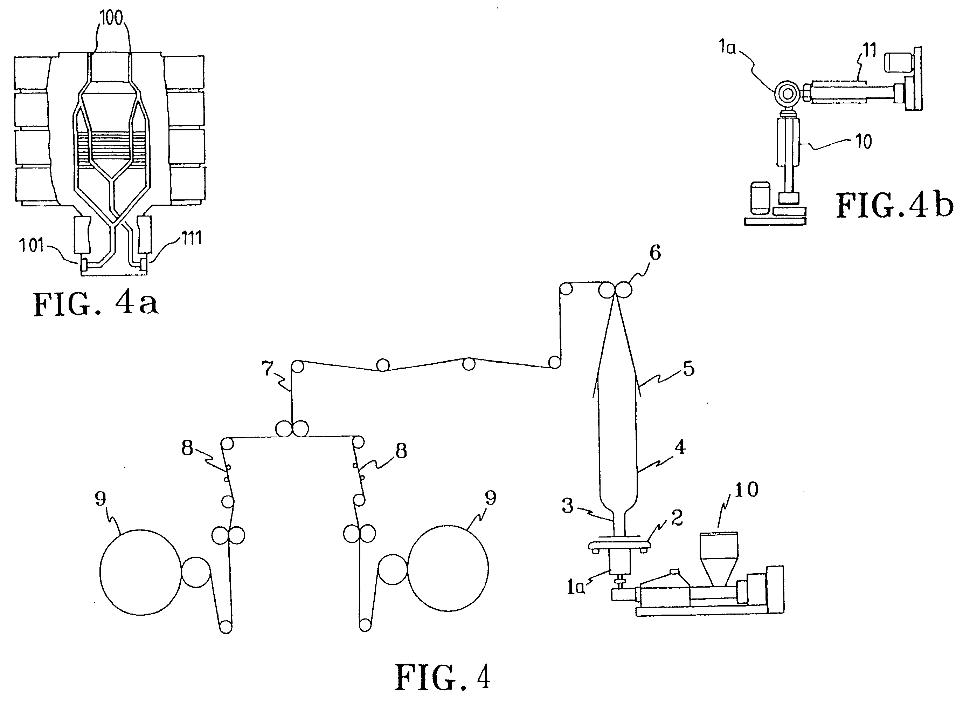

The process of the manufacture of the double-layer environmental friendly paper is similar to that of the single-layered paper, except that the single inner passage 101 and the inlet of the forming mould 1 are replaced by two inner passages 101 and 111 and two inlets of a forming mould 1a. Referring to Figs. 4, 4a, and 4b, the extruded materials from the extruders 10 and 11 are fed into the inner passages 101 and 111 through their corresponding inlets, respectively, and then meet at a shrunken copassage 100, resulting in a double-layered material. The double-layered material is then moulded into a paper film tube 3 having a hollow ○-shape through the gate of the forming mould 1a. The amount of the extruded materials and internal temperature of the extruders 10 and 11 are suitably controlled so that the materials from the inner passages 101 and 111, respectively, are combined into a double-layered material. The following steps of this process are identical with those of the process for the manufacture of a single-layered paper.

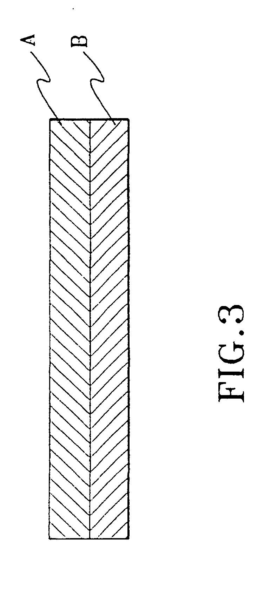

With respect to the raw materials for this process, the double-layered environmental friendly paper, referring to Fig. 3, comprises an A layer from the extruder 10 and a B layer from the extruder 11. The components of the A layer include about 56% to 80% by weight of inorganic mineral powders, about 43% to 18% by weight of polyethylene, and about 1% to 2% by weight of additives. A combination of the components is subjected to the steps of mixing, extruding, milling, and polymerizing, resulting in granulates which are to be applied to the extruder 10. The components of the B layer include 70% to 80% by weight of inorganic mineral powders, 29% to 18% by weight of polyethylene, and 1% to 2% by weight of additives. A combination of the components is subjected to the steps of mixing, extruding, milling, and polymerizing, resulting in granulates which are to be applied to the extruder 11.

According to the process for the manufacture of a double-layered environmental friendly paper, the thickness of the paper ranges from about 30 µm to about 150 µm and the density ranges from about 0.4 g/cm³ to about 1 g/cm³. The relative thickness of the A layer and B layer can be adjusted as required, for example, 20% A layer and 80% B layer, 50% A layer and 50% B layer, 80% A layer and 20% B layer.

Double-layered environmental friendly papers can be used for printing, packaging, and decoration, etc. Each layer of these products can be designed with different colors as required (for instance, one layer is light red and the other layer is light yellow) by adding different pigments thereto. Double-layered environmental friendly papers have the same advantages as those of the single-layered papers.

The present invention is also directed to a process for the manufacture of a triple-layered environmental friendly paper. The differences between this process and the process for the manufacture of a single-layered environmental friendly paper are explained inthe following two aspects.

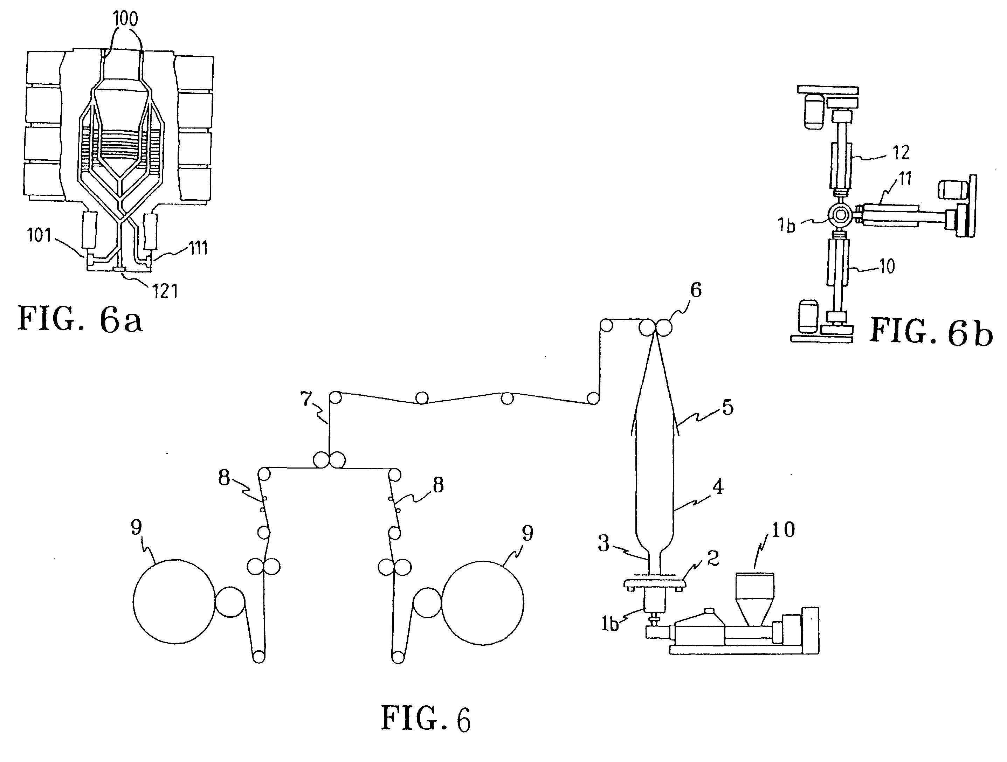

The process of the manufacture of a triple-layered environmental friendly paper is similar to that of the single-layered environmental friendly paper, except that the single inner passage 101 and the inlet of the forming mould 1 are replaced by three inner passages 101, 111 and 121 and three inlets of a forming mould 1b. Referring to Figs. 6, 6a, and 6b, the extruded materials from the extruders 10, 11, and 12 are fed into the inner passages 101, 111, and 121 through their corresponding inlets, respectively, and then meet at a shrunken copassage 100, resulting in triple-layered material. The triple-layered material is then moulded into a paper film tube 3 having a hollow ○ shape. The amount of the extruded material and internal temperature of the extruders 10, 11, and 12 are suitably controlled so that the materials from the passages 101, 111 and 121, respectively, are combined into a triple-layered material. The following steps of this process are identical with those of the process for the manufacture of a single-layer paper.

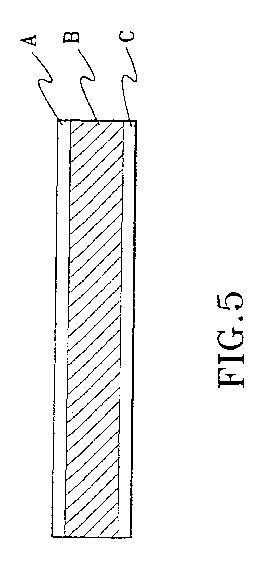

Regarding the raw materials for this process, the triple-layered environmental friendly paper, referring to Fig. 5, comprises an A layer from the extruder 10, a B layer from the extruder 11, and a C layer from the extruder 12. The components of the A layer include about 56% to 80% by weight of inorganic mineral powders, about 43% to 18% by weight of polyethylene, and about 1% to 2% by weight of additives. A combination of the components is subjected to the steps of mixing, extruding, milling, and polymerizing, resulting in granulates which are to be applied to the extruder 10. The components of the B layer include 70% to 80% by weight of inorganic mineral powders, 29% to 18% by weight of polyethylene, and 1% to 2% by weight of additives. A combination of the components is subjected to the steps of mixing, extruding, milling, and polymerizing, resulting in granulates which are to be applied to the extruder 11. The components of the C layer include about 56% to 80% by weight of inorganic mineral powders, about 43% to 18% by weight of polyethylene, and about 1% to 2% by weight of additives. A combination of the components is subjected to the steps of mixing, extruding, milling, and polymerizing, resulting in granulates which are to be applied to the extruder 12.

According to the process for the manufacture of a triple-layered environmental friendly paper, the thickness of the paper ranges from about 30 µm to about 150 µm. The relative thickness of the A layer, B layer, and C layer can be adjusted as required, for example, 10% to 25% of the A layer, 80% to 50% of the B layer, and 10% to 25% of the C layer. The triple-layered paper can be used for printing, packaging, decoration, and bags, etc. Each surface layer, i.e., A layer and C layer, of this product can be designed with different colors as required by adding different pigments thereto. Each combination of the components of the A layer, B layer, and C layer can be adjusted so as to for example increase the tensile strength of the paper for different purposes and at the same time using a higher amount of inorganic powders in the B layer, dramatically reducing costs.

It should be understood that the process of the present invention can be used to produce environmental friendly papers having more than three layers on the basis of the above-mentioned general procedures.

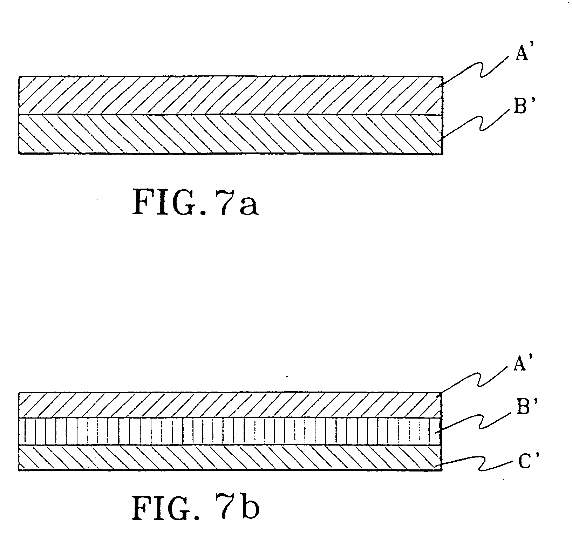

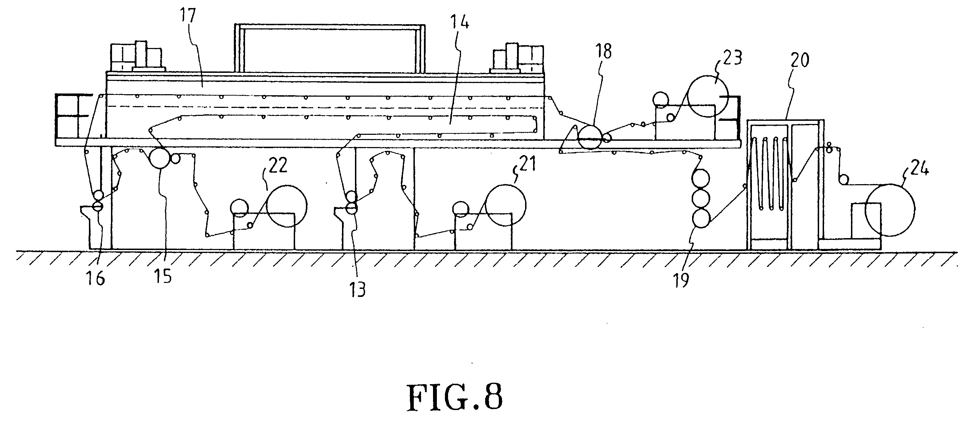

Single-layered environmental friendly papers, double-layered environmental friendly papers, triple-layered environmental friendly papers, and even environmental friendly papers having more than three layers of the present invention each independently having a thickness in a range of about 30 µm to about 150 µm and independently having the same or different components can be laminated by a laminating machine as shown in Fig. 8 to form a two-layered laminated environmental friendly paper (as shown in Fig. 7a) or to form a three-layered laminated environmental friendly paper (as shown in Fig. 7b) having a thickness in a range of about 150 µm to about 450 µm.

The single-layered environmental friendly papers, double-layered environmental friendly papers, triple-layered environmental friendly papers, and even environmental friendly papers having more than three layers manufactured according to the process of the present invention can be further laminated to form laminated environmental friendly papers for specific purposes. Referring to Fig. 8, a first environmental friendly paper on a feed roller 21 is directed by means of a guiding means to a gluing means 13 to be applied with a glue on one surface of the first environmental friendly paper and then is directed to an oven 14. After the glue on the first environmental friendly paper is dried, the first environmental friendly paper is laminated with a second environmental friendly paper fed from a feed roller 22 at a lamination roller 15, forming a two-in-one laminated environmental friendly paper. The two-in-one environmental friendly laminated paper is then directed by a plurality of guiding means to a setting means 19 so that the paper is set by cooling. Then, the two-in-one environmental friendly laminated paper is adjusted by a tension controller 20 and subsequently scrolled on a roller 24. Alternatively, the two-in-one environmental friendly laminated paper before being directed to the setting means 19 can be directed to a gluing means 16 by means of a plurality of guiding means and be applied with glue. The two-in-one environmental friendly laminated paper applied with glue is then directed to an oven 17 for drying of the glue thereon. Thereafter, the two-in-one environmental friendly laminated paper is directed to a lamination roller 18 and is laminates with a third environmental friendly paper fed from a feed roller 23, resulting in a three-in-one environmental friendly laminated paper. The resulting environmental friendly laminated paper is then directed by a plurality of guiding means to a setting means 19 so that the environmental friendly paper is set by cooling. Then, the three-in-one environmental friendly laminated paper is adjusted by a tension controller 20 and is wound onto a roller 24.

The environmental friendly papers manufactured according to the present invention can be applied to the field of printing, packaging, and decoration. Some of them can be used directly without any pretreatment while some of them need suitable pretreatment, for instance glossy surface treatment and hazy surface treatment, for special purposes. Both water borne coatings and non-water borne coatings can be used to coat the papers manufactured using the present invention. The formulation of water borne coating is comprised of acrylic resin, isopropanol, polyvinyl alcohol, clays, an anti-static agent, 28% aqueous ammonia, pure water, and vinyl acetate.

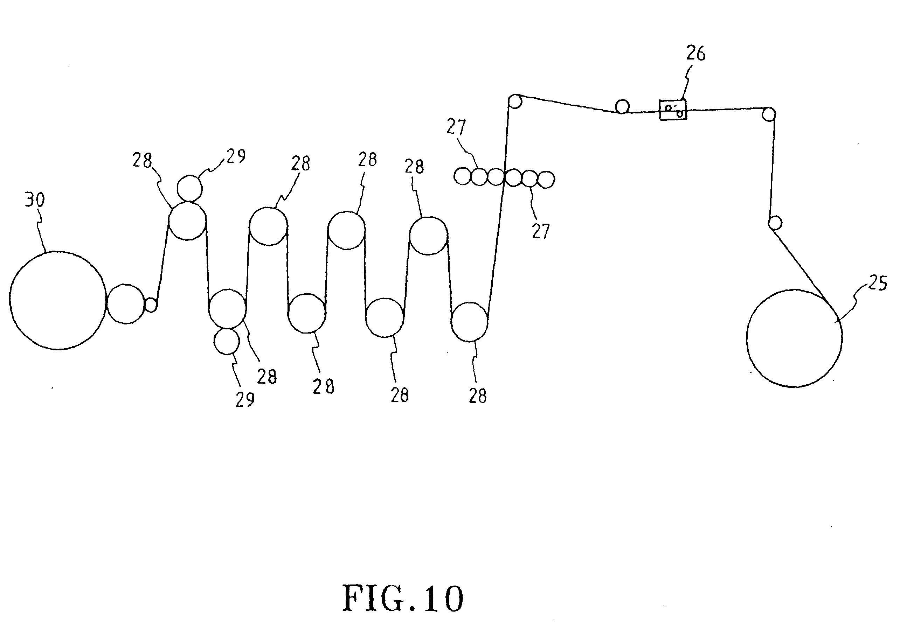

Referring to Fig. 10, an environmental friendly paper from a feed roller 25 is directed to a corona means 26 and treated by a high-pressure discharge to form numerous microvoids on the two sides of the paper so that the adhesion of the paper during coating is enhanced. The paper is directed to pass through two sets of coaters 27 (three coaters per set) so that the coating thickness can be suitably controlled. The coated paper is directed to a plurality of drying rollers 28 which have been subjected to mirror finish treatment so that the coated surface of the paper is quickly dried and a mirror effect is obtained. Alternatively, the paper can be pressed by a haze roller 29 so that a haze effect is imparted to the coated surface of the paper. The resulting environmental friendly paper is wound into a roller 30.

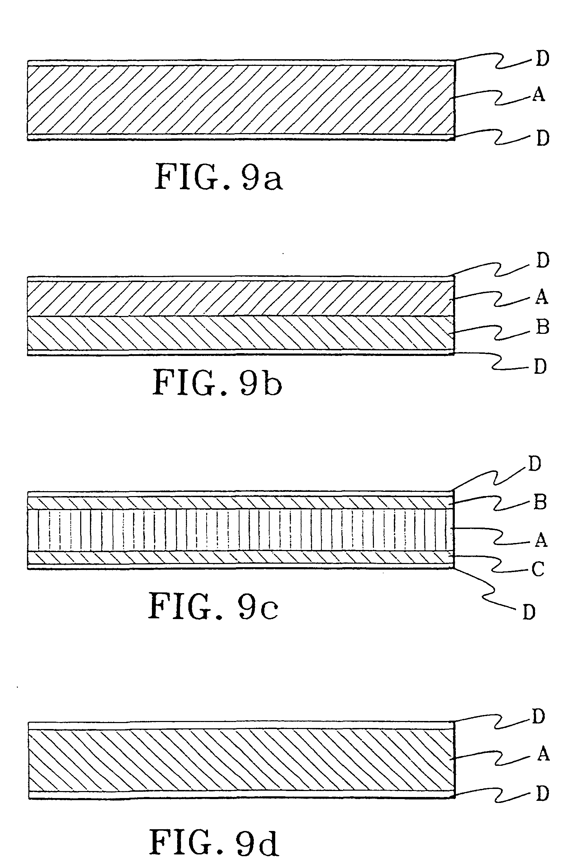

The environmental friendly paper as shown in Fig. 9a is a single-layered paper which has been coated. The paper as shown in Fig. 9b is a double-layered paper which has been coated. The paper as shown in Fig. 9c is a triple-layered paper which has been coated. The paper as shown in Fig. 9d is a laminated paper which has been coated.

Environmental friendly papers of the present invention will now be further illustrated with reference to the following examples.

### Example 1 Single-layered Environmental Friendly Paper

A single-layered environmental friendly paper is produced from a combination of 70% by weight of inorganic mineral powders (35% by weight of calcium carbonate, 6% by weight of titanium dioxide, 24% by weight of diatomaceous earth, and 5% by weight of clay), 28% by weight of polyethylene (20% by weight of high density polyethylene, and 8% by weight of medium density polyethylene), and 2% by weight of additives (0.8% by weight of beta-(3,4-epoxycyclohexyl)ethyltrimethoxy-silane, 0.4% by weight of N-oleyl palmitamide, and 0.8% by weight of N,N-bis(2-hydroxyethyl)stearyl amine). The combination is subjected to the steps of mixing, extruding, milling, and polymerizing and results in granulates. The granulates are fed into the extruder as shown in Fig. 2, and single-layered environmental friendly papers each having a thickness of 73 µm and 82 µm are produced depending on the parameters selected.

### Example 2 Single-layered Environmental Friendly Paper

A single-layered environmental friendly paper is produced from a combination of 80% by weight of inorganic mineral powders (35% by weight of calcium carbonate, 5% by weight of titanium dioxide, 35% by weight of diatomaceous earth, and 5% by weight of talc), 18% by weight of polyethylene (high density polyethylene), and 2% by weight of additives (0.8% by weight of beta-(3,4-epoxycyclohexyl)ethyltrimethoxy-silane, 0.4% by weight of N-oleyl palmitainide, and 0.8% by weight of N,N-bis(2-hydroxyethyl)stearyl amine). The above combination is subjected to the steps of mixing, extruding, milling, and polymerizing and results in granulates. The granulates are fed into the extruder as shown in Fig. 2 and single-layered environmental friendly papers each having a thickness of 102 µm and 116 µm are produced depending on the parameters selected.

### Example 3 Double-layered Environmental Friendly Paper

A double-layered environmental friendly paper is composed of an A layer and a B layer. The A layer is produced from a combination of 60% by weight of natural inorganic mineral powders (30% by weight of calcium carbonate, 5% by weight of titanium dioxide, 25% by weight of diatomaceous earth), 38% by weight of polyethylene (high density polyethylene), and 2% by weight of additives (0.8% by weight of beta-(3,4-epoxycyclohexyl)ethyltrimethoxy-silane, 0.4% by weight of N-oleyl palmitamide, and 0.8% by weight of N,N-bis(2-hydroxyethyl)stearyl amine). The combination is subjected to the steps of mixing, extruding, milling, and polymerizing, and it results in the first granulates. The B layer is produced from a combination of 70% by weight of inorganic mineral powders (32% by weight of calcium carbonate, 3% by weight of titanium dioxide, 32% by weight of diatomaceous earth, and 3% by weight of red pigment), 28% by weight of polyethylene (18% by weight of high density polyethylene and 10% by weight of medium density polyethylene), and 2% by weight of additives (0.8% by weight of beta-(3,4-epoxycyclohexyl)ethyltrimethoxy-silane, 0.4% by weight of N-oleyl palmitamide, and 0.8% by weight of N,N-bis(2-hydroxyethyl)stearyl amine). The combination is subjected to the steps of mixing, extruding, milling, and polymerizing, and it results in the second granulates. The first granulates and second granulates are fed into extruders 10 and 11, respectively, as shown in Fig. 4. The following steps are the same as those in Examples 1 and 2. A double-layered environmental friendly paper having a thickness of 100 µm is produced depending on the parameters selected. The A layer constitutes 40% of the total thickness of the environmental friendly paper product and the B layer constitutes 60% of the total thickness of the environmental friendly paper product.

### Example 4 Triple-layered Environmental Friendly Paper

A triple-layered environmental friendly paper is composed of an A layer, a B layer, and a C layer. The A layer is produced from a combination of 60% by weight of inorganic mineral powders (30% by weight of calcium carbonate, 3% by weight of titanium dioxide, 24% by weight of diatomaceous earth, and 3% by weight of red pigment), 38% by weight of polyethylene (high density polyethylene), and 2% by weight of additives (0.8% by weight of beta-(3,4-epoxycyclohexyl)ethyltrimethoxysilane, 0.4% by weight of N-oleyl palmitamide, and 0.8% by weight of N,N-bis(2-hydroxyethyl)stearyl amine). The above combination is subjected to the steps of mixing, extruding, milling, and polymerizing and results in the first granulates. The B layer is produced from a combination of 80% by weight of inorganic mineral powder (45% by weight of calcium carbonate, 5% by weight of titanium dioxide, and 30% by weight of diatomaceous earth), 18% by weight of polyethylene (medium density polyethylene), and 2% by weight of additive (0.8% by weight of beta-(3,4-epoxycyclohexyl)ethyltrimethoxy-silane, 0.4% by weight of N-oleyl palmitamide, and 0.8% by weight of N,N-bis(2-hydroxyethyl)stearyl amine). The combination is subjected to the steps of mixing, extruding, milling, and polymerizing and results in the second granulates. The C layer is produced from a combination of 60% by weight of inorganic mineral powders (30% by weight of calcium carbonate, 3% by weight of titanium dioxide, 24% by weight of diatomaceous earth, and 3% by weight of yellow pigment), 38% by weight of polyethylene (high density polyethylene), and 2% by weight of additives (0.8% by weight of beta-(3,4-epoxycyclohexyl)ethyltrimethoxy-silane, 0.4% by weight of N-oleyl palmitamide, and 0.8 weight % N,N-bis(2-hydroxyethyl)stearyl amine). The combination is subjected to the steps of mixing, extruding, milling, and polymerizing and results in the third granulates. The first, second, and third granulates are fed into extruders 10, 11, and 12, respectively, as shown in Fig. 6. The following steps are the same as those of Examples 1 and 2. The triple-layered environmental friendly paper having a thickness of 100 µm is produced depending on the parameters selected. The B layer constitutes 70% of the total thickness of the environmental friendly paper product and the A and C layers constitutes 30% of the total thickness of the environmental friendly paper product.

The following table provides testing results of the environmental friendly papers of Examples 1 and 2.

| Example No. | | 1 | | 2 | |
|---|---|---|---|---|---|
| Average thickness (µm) | | 73 | 82 | 102 | 116 |
| Grammage(g/m²) | | 55.7 | 64.1 | 66.4 | 74.6 |
| Apparent sheet density(g/cm³) | | 0.76 | 0.78 | 0.65 | 0.64 |
| Brightness(%) | | 80.9 | 80.5 | 81.6 | 81.5 |
| Opacity(%) | | 94.2 | 95.7 | 97.7 | 98.0 |
| Tearing strength (gf) | CD | 22.0 | 29.5 | 22.8 | 26.3 |
| | MD | 18.3 | 24.8 | 22.8 | 23.0 |
| Tensile strength (kgf/15mm) | CD | 0.97 | 1.08 | 1.14 | 1.03 |
| | MD | 1.09 | 1.22 | 1.26 | 1.13 |

Test standards for the above data are list below.
Thickness: TAPP T-411
Grammage: TAPPI T-410
Apparent density: ISO 534
Brightness: TAPPI T-452
Opacity : TAPPI T-425
Tearing strength: (TAPPI T-414)
Tensile strength: TAPPI T-404

## Claims

1. A process for the manufacture of a synthetic paper, which process comprises:
(i) mixing, extruding, milling and polymerizing a combination of from 70% to 80% by weight of inorganic mineral powders, 29% to 18% by weight of polyethylene and 1% to 2% by weight of additives to form granules;
(ii) feeding the granules into a paper film producing means which comprises at least one extruder and a forming mould having an ○-shaped gate, wherein the forming mould has at least one inlet thereon each inlet defining an inner passage in the forming mould and communicating with the gate of the forming mould;
(iii) melting the granules in the extruder, transferring the melted granules to the inlet of the forming mould, and moulding the melted granules into a hollow film tube which substantially corresponds to the ○-shaped gate;
(iv) cooling the tube; and
(v) inflating and pulling an end of the film tube so that the film tube is stretched in two dimensions simultaneously to form the paper, wherein the ratio of the tensile strength of said paper in the machine direction to the tensile strength of said paper in the transverse direction is in the range from 1.13:1 to 1:0.91 and the ratio of the tearing strength of said paper in the machine direction to the tearing strength of said paper in the transverse direction is in the range from 1.0:1 to 1:1.20.

2. A process according to claim 1, which further comprises directing the paper into a folding means to form a folded paper.

3. A process according to claim 2, which further comprises directing the folded paper to a cutting means so that the folded paper is cut into two sheets.

4. A process according to any one of the preceding claims, wherein the extruder is at a temperature of 150° to 220°C.

5. A process according to any one of the preceding claims wherein the film tube is moulded upwards by the forming mould.

6. A process according to any one of the preceding claims, wherein the film tube is cooled to a temperature of from 80°C to 120°C at a distance of from 30 mm to 700 mm from the gate of the forming mould.

7. A process according to any one of the preceding claims wherein the paper film producing means comprises one extruder and a forming mould having an inlet and an inner passage, or two extruders and a forming mould having two inlets and two inner passages, or three extruders and a forming mould having three inlets and three inner passages.

8. A process according to any one of the preceding claims which further comprises laminating the paper to form a laminate with a thickness of from 150 µm to 450 µm.

9. A process according to any one of preceding claims which further comprises coating the paper.

10. A synthetic paper comprising a sheet having at least one layer, wherein the layer is made from a composition consisting essentially of inorganic mineral powders in an amount from 70% to 80% by weight based on the total weight of the composition, polyethylene in an amount from 18% to 29% by weight based on the total weight of the composition, and 1% to 2% by weight of additives, wherein the ratio of the tensile strength of said paper in the machine direction to the tensile strength of said paper in the transverse direction is in the range from 1.13:1 to 1:0.91 and the ratio of tearing strength of said paper in the machine direction to the tearing strength of said paper in the transverse direction is in the range from 1.0:1 to 1:1.20.

## Patentansprüche

1. Verfahren zur Herstellung eines synthetischen Papiers, umfassend:
(i) das Vermischen, Extrudieren, Mahlen und Polymerisieren einer Kombination aus 70 bis 80 Gew.-% anorganischen Mineralpulvern, 29 bis 18 Gew.-% Polyethylen und 1 bis 2 Gew.-% Additiven zur Bildung von Granalien;
(ii) das Einspeisen der Granalien in eine Papierfolien-Herstellungseinrichtung, die mindestens einen Extruder und ein Formwerkzeug mit einer O-förmigen Austrittsspalte umfasst, wobei das Formwerkzeug mindestens einen Einlass aufweist, wobei jeder Einlass eine innere Passage im Formwerkzeug bildet und mit der Austrittsspalte des Formwerkzeugs kommuniziert;
(iii) das Schmelzen der Granalien im Extruder, das Transportieren der geschmolzenen Granalien in den Einlaß des Formwerkzeugs und das Formen der geschmolzenen Granalien zu einem hohlen Folienschlauch, der im wesentlichen der O-förmigen Austrittsspalte entspricht;
(iv) das Abkühlen des Schlauches; und
(v) das Aufblasen und Ziehen eines Endes des Folienschlauches, so dass der Folienschlauch gleichzeitig in zwei Richtungen gestreckt wird, um das Papier zu bilden, wobei das Verhältnis der Zugfestigkeit des Papiers in Maschinenrichtung zur Zugfestigkeit des Papiers in Querrichtung im Bereich von 1,13:1 bis 1:0,91 liegt und das Verhältnis der Reißfestigkeit des Papiers in Maschinenrichtung zur Reißfestigkeit des Papiers in Querrichtung im Bereich von 1,0:1 bis 1:1,20 liegt.

2. Verfahren nach Anspruch 1, ferner umfassend das Zuführen des Papiers zu einer Falteinrichtung zur Erzeugung eines gefalteten Papiers.

3. Verfahren nach Anspruch 2, ferner umfassend das Zuführen des gefalteten Papiers zu einer Schneideeinrichtung, so dass das gefaltete Papier in zwei Bögen zerschnitten wird.

4. Verfahren nach einem der vorstehenden Ansprüche, wobei der Extruder eine Temperatur von 150 bis 220 °C aufweist.

5. Verfahren nach einem der vorstehenden Ansprüche, wobei der Folienschlauch durch das Formwerkzeug in Aufwärtsrichtung geformt wird.

6. Verfahren nach einem der vorstehenden Ansprüche, wobei der Folienschlauch in einer Entfernung von 30 bis 700 mm von der Austrittsspalte des Formwerkzeugs auf eine Temperatur von 80 bis 120 °C abgekühlt wird.

7. Verfahren nach einem der vorstehenden Ansprüche, wobei die Papierfolien-Herstellungseinrichtung einen Extruder und ein Formwerkzeug mit einem Einlass und einer inneren Passage oder zwei Extruder und ein Formwerkzeug mit zwei Einlässen und zwei inneren Passagen oder drei Extruder und ein Formwerkzeug mit drei Einlässen und drei inneren Passagen umfasst.

8. Verfahren nach einem der vorstehenden Ansprüche, ferner umfassend das Laminieren des Papiers unter Bildung eines Laminats mit einer Dicke von 150 bis 450 µm.

9. Verfahren nach einem der vorstehenden Ansprüche, ferner umfassend das Beschichten des Papiers.

10. Synthetisches Papier, umfassend einen Bogen mit mindestens einer Schicht, wobei die Schicht aus einer Zusammensetzung gebildet ist, die im wesentlichen aus anorganischen Mineralpulvern in einer Menge von 70 bis 80 Gew.-%, bezogen auf das Gesamtgewicht der Zusammensetzung, Polyethylen in einer Menge von 18 bis 29 Gew.-%, bezogen auf das Gesamtgewicht der Zusammensetzung, und 1 bis 2 Gew.-% Additiven besteht, wobei das Verhältnis der Zugfestigkeit des Papiers in Maschinenrichtung zur Zugfestigkeit des Papiers in Querrichtung im Bereich von 1,13:1 bis 1:0,91 liegt, und das Verhältnis der Reißfestigkeit des Papiers in Maschinenrichtung zur Reißfestigkeit des Papiers in Querrichtung im Bereich von 1,0:1 bis 1:1,20 liegt.

## Revendications

1. Procédé pour la production d'un papier synthétique, lequel procédé comprend :
(i) le brassage, l'extrusion, le broyage et la polymérisation d'une combinaison constituée de 70 % à 80 % en poids de poudres minérales inorganiques, 29 % et 18 % en poids de polyéthylène et 1 % à 2 % en poids d'additifs pour former des granules ;
(ii) l'acheminement des granules dans un moyen de production de film de papier qui comprend au moins une extrudeuse et un moule de mise en forme ayant une entrée en forme de O, dans lequel le moule de mise en forme a au moins un orifice d'admission, chaque orifice d'admission définissant un passage intérieur dans le moule de mise en forme et communiquant avec l'entrée du moule de mise en forme ;
(iii) la fusion des granules dans l'extrudeuse, le transfert des granules fondus vers l'orifice d'admission du moule de mise en forme et le moulage des granules fondus en un tube de film creux qui correspond sensiblement à l'entrée en forme de O ;
(iv) le refroidissement du tube ; et
(v) le gonflage et la traction d'une extrémité du tube de film afin que le tube de film soit étiré simultanément en deux dimensions pour former le papier, dans lequel le rapport de la résistance à la traction dudit papier dans la direction de la machine à la résistance à la traction dudit papier dans la direction transversale est dans la plage de 1,13:1 à 1:0,91 et le rapport de la résistance à la déchirure dudit papier dans la direction de la machine à la résistance à la déchirure dudit papier dans la direction transversale est dans la plage de 1,0:1 à 1:1,20.

2. Procédé selon la revendication 1, qui comprend en outre l'acheminement du papier dans un moyen de pliage pour former un papier plié.

3. Procédé selon la revendication 2, qui comprend en outre l'acheminement du papier plié vers un moyen de découpe de manière à découper le papier plié en deux feuilles.

4. Procédé selon l'une quelconques des revendications précédentes, dans lequel l'extrudeuse est à une température de 150° à 220° C.

5. Procédé selon l'une quelconque des revendications précédentes dans lequel le tube de film est moulé vers le haut par le moule de mise en forme.

6. Procédé selon l'une quelconque des revendications précédentes, dans lequel le tube de film est refroidi à une température de 80° C à 120° C à une distance de 30 mm à 700 mm de l'entrée du moule de mise en forme.

7. Procédé selon l'une quelconque des revendications précédentes dans lequel le moyen de production du film de papier comprend une seule extrudeuse et un moule de mise en forme ayant un orifice d'admission et un passage intérieur, ou deux extrudeuses et un moule de mise en forme ayant deux orifices d'admission et deux passages intérieurs, ou trois extrudeuses et un moule de mise en forme ayant trois orifices d'admission et trois passages intérieurs.

8. Procédé selon l'une quelconque des revendications précédentes qui comprend en outre la stratification du papier pour former un stratifié ayant une épaisseur de 150 µm à 450 µm.

9. Procédé selon l'une quelconque des revendications précédentes qui comprend en outre le couchage du papier.

10. Papier synthétique comprenant une feuille ayant au moins une couche, dans lequel la couche est faite à partir d'une composition constituée essentiellement de poudres minérales inorganiques en une quantité de 70 % à 80 % en poids basée sur le poids total de la composition, de polyéthylène en une quantité de 29 % 18 % en poids basée sur le poids total de la composition et de 1 % à 2 % en poids d'additifs, dans lequel le rapport de la résistance à la traction dudit papier dans la direction de la machine à la résistance à la traction dudit papier dans la direction transversale est dans la plage de 1,13:1 à 1:0,91 et le rapport de la résistance à la déchirure dudit papier dans la direction de la machine à la résistance à la déchirure dudit papier dans la direction transversale est dans la plage de 1,0:1 à 1:1,20.
